# EUROPÄISCHE PATENTSCHRIFT

(11) **EP 1 444 761 B1**
(45) Veröffentlichungstag und Bekanntmachung des Hinweises auf die Patenterteilung: **26.10.2005**
(21) Anmeldenummer: 02782763.3
(22) Anmeldetag: 08.11.2002
(51) Int. Cl.: H02B 1/20

(54) **MEHRPHASIGES SAMMELSCHIENENSYSTEM**
MULTIPHASE BUSBAR SYSTEM
SYSTEME DE BARRES COLLECTRICES POLYPHASEES

(30) Priorität: 15.11.2001 DE 10156214
(43) Veröffentlichungstag der Anmeldung: 11.08.2004
(73) Patentinhaber: SIEMENS AKTIENGESELLSCHAFT, 80333 München (DE)
(72) Erfinder: SÖRGEL, Norbert, 92284 Poppenricht (DE); MERZ, Stefan, 91336 Heroldsbach (DE); BAUER, Markus, 92637 Weiden (DE); BOLLINGER, Georg, 92431 Neunburg v. Wald (DE); BRANDL, Wolfgang, 92224 Amberg (DE); EDENHARTER, Georg, 92286 Rieden (DE); HARTINGER, Peter, 92439 Bodenwöhr (DE); REISKY, Klaus, 92421 Schwandorf (DE)
(86) Internationale Anmeldenummer: PCT/DE2002/004151
(87) Internationale Veröffentlichungsnummer: WO 2003/047059

(56) Entgegenhaltungen:
- EP-A- 0 063 970
- DE-U- 7 829 012

## Beschreibung

Die Erfindung betrifft ein mehrphasiges Sammelschienensystem zur Stromversorgung mehrerer Schaltgeräte (Siehe EP-A-0063970).

Bisher wird zur Stromeinspeisung über ein Sammelschienensystem bei Leistungsschaltern mit Käfigzug-Federklemmanschlusstechnik eine Reihenklemme als separate Einspeiseklemme verwendet. Von der Reihenklemme wird der Strom mit Leitungen auf ein Sammelschienensystem geführt, von dem aus der Abgriff für die einzelnen Leistungsschalter bzw. Schaltgeräte mit flexiblen Leitungen erfolgt. Werden z.B. vier Abzweige mit einem solchen Sammelschienensystem versorgt und es sollen vier weitere Abzweige parallel mit der gleichen Einspeisung ergänzt werden, dann ist es nur möglich, indem der Strom in der Sammelschiene über die Klemmen des vierten Leistungsschalters geleitet wird.

Daher liegt der Erfindung die Aufgabe zugrunde, ein mehrphasiges Sammelschienensystem der oben genannten Art dahingehend zu verbessern, dass eine Erweiterung zum Anschluss weiterer Schaltgeräte auf einfache Weise ermöglicht.

Die Aufgabe wird dadurch gelöst, dass das Sammelschienensystem mindestens einen ersten und einen zweiten Sammelschienenblock aufweist, wobei die Sammelschienen des ersten Sammelschienenblocks mit mehreren fest angebauten Einspeiseklemmen und mittels eines mehrpoligen Verbindungssteckers mit den Sammelschienen des zweiten Sammelschienenblocks elektrisch verbunden sind.

Dies bedeutet, dass mit nur einer Einspeisestelle mehrere Abzweige bzw. Schaltgeräte versorgt werden können, wobei die Begrenzung durch den Summenstrom der Einspeiseklemmen an der Einspeisestelle gegeben ist.

Eine vorteilhafte Weiterbildung der Erfindung ist gegeben, wenn mindestens an einem der freien Enden der Sammelschienenblöcke ein weiterer Sammelschienenblock mittels eines weiteren Verbindungssteckers angeschlossen ist.

Eine weitere vorteilhafte Ausführung ist gegeben, wenn der Verbindungsstecker als Doppel-Lyra-Verbindungsstecker mit vier Lyro-Kontakten pro Phase ausgeführt ist, von denen zwei eine der Sammelschienen des ersten Sammelschienenblocks und die beiden anderen gegenüberliegende Sammelschiene des zweiten Sammelschienenblocks kontaktieren. Auf diese Weise ist eine zuverlässige Stromführung mit geringem Übergangswiderstand möglich.

Weitere vorteilhafte Ausbildungen der Erfindung sind den weiteren Unteransprüchen zu entnehmen.

Eine Ausführung der Erfindung wird im folgenden anhand einer Zeichnung näher erläutert. Es zeigen:
- FIG 1: Ein Erfindungsgemäßes mehrphasiges Sammelschienensystem zur Versorgung mehrerer Schaltgeräte in der Frontansicht,
- FIG 2: eine Schnittdarstellung durch das Sammelschienensystem gemäß FIG 1 im Bereich der Einspeisestelle und
- FIG 3: eine Schnittdarstellung des Sammelschienensystems gemäß FIG 1 im Bereich der Verbindung zweier Sammelschienenblöcke.

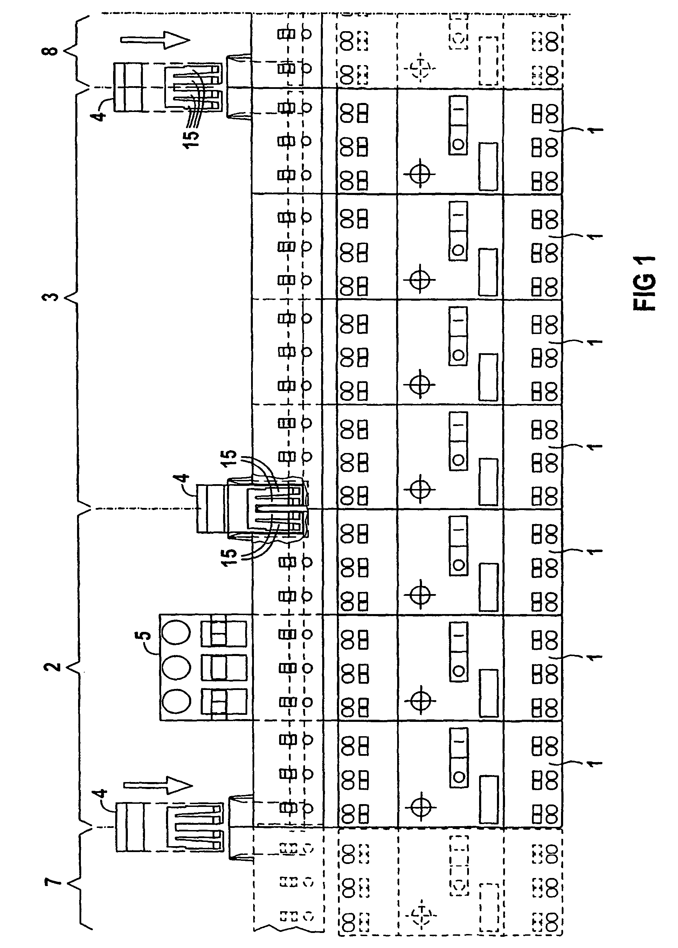

In FIG 1 ist ein erfindungsgemäßes mehrphasiges Sammelschienensystem zur Stromversorgung von Schaltgeräten 1 dargestellt. Das Sammelschienensystem weist einen ersten mehrphasigen Sammelschienenblock 2 und einen zweiten mehrphasigen Sammelschienenblock 3 auf, die jeweils über den Schaltgeräten 1 angeordnet und durch einen mehrpoligen Verbindungsstecker 4 elektrisch miteinander verbunden sind. Am Sammelschienenblock 2 ist eine Einspeisestelle mit mehreren Einspeiseklemmen 5 fest angebaut, d.h. dass zwischen jeder Sammelschiene 6 des Sammelschienenblocks 2 und der zugehörigen Einspeiseklemme 5 nur ein geringer ohmscher Widerstand besteht. Demzufolge ergeben sich im Betrieb nur geringe Stromübergangsverluste.

Der mehrpolige Verbindungsstecker 4 ist als Doppel-Lyra-Verbindungsstecker mit vier elektrisch miteinander verbundenen Lyra-Kontakten 6 pro Phase ausgeführt. Zwei der Lyra-Kontakte 6 kontaktieren eine der Sammelschienen 6 des ersten Sammelschienenblocks 2, die beiden anderen kontaktieren die gegenüberliegende Sammelschiene des zweiten Sammelschienenblocks 3. An den freien Enden der beiden Sammelschienenblöcke 2, 3 sind, wie in FIG 1 angedeutet, mit mehrpoligen Verbindungssteckern 4 weitere Sammelschienenblöcke 7, 8 anschließbar. Die Anzahl der möglichen Schaltgeräte 1 wird dabei begrenzt durch den zulässigen Summenstrom, für den das Sammelschienensystem mit Einspeisestelle dimensioniert wird.

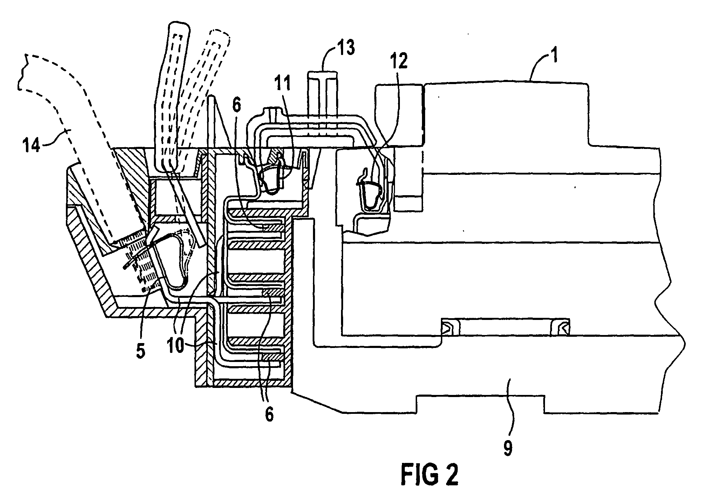

In FIG 2 ist im Querschnitt der Sammelschienenblock 2 sowie ein Schaltgerät 1 im Bereich der Einspeiseklemmen 5 dargestellt. Der Sammelschienenblock 2 mit den drei Sammelschienen 6 und die fest angebauten Einspeiseklemmen 5 sind durch einen Befestigungsblock 9 gehalten. Auf den zum Sammelschienenblock 2 zugehörigen Befestigungsblock 9 sind gemäß FIG 1 drei Schaltgeräte 1 mittels Hutschienenbefestigung aufgeschnappt, von denen in FIG 2 aufgrund der Schnittdarstellung nur eines sichtbar ist.

Von den Sammelschienen 6 gibt es jeweils eine durchgehende, elektrisch leitende Verbindung 10 einerseits zu den jeweiligen Einspeiseklemmen 5 und andererseits zu Anschlüssen 11 innerhalb des Sammelschienenblocks 2, die zur elektrischen Verbindung mit den Anschlüssen 12 des Schaltgeräts 1 dienen. Die Einspeiseklemmen 5 sowie die Anschlüsse 11, 12 sind sämtlich als Käfigzug-Federklemmen ausgeführt. Allerdings ist es auch möglich bei den Schaltgeräten 1 Schraubanschlusstechnik zu verwenden. In diesem Fall erfolgt die dreipolige elektrische Verbindung zum Schaltgerät konventionell mit Einzelleitern. Bei der Demontage eines Schaltgeräts mit Schraubanschlusstechnik unter Spannung muss aus Sicherheitsgründen erst die Leitung an der Sammelschiene mit einem isolierten Schraubendreher gelöst werden.

Die elektrische Verbindung zwischen den Anschlüssen 11 und 12 erfolgt über einen weiteren Verbindungsstecker 13 mittels einer einfachen Steckverbindung. Über die Käfigzug-Federklemmen 5 erfolgt mittels der Zuleitungen 14 von außen her die Stromversorgung.

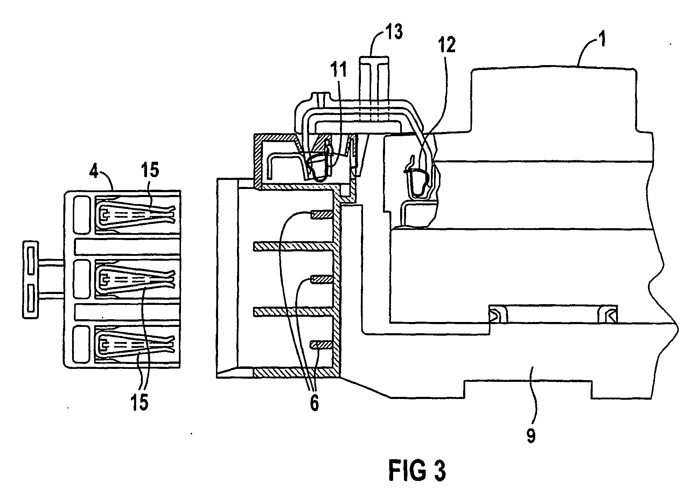

In FIG 3 ist das Sammelschienensystem nach FIG 1 im Bereich der Verbindung der beiden Sammelschienenblöcke 2 und 3 dargestellt. In FIG 3 tragen die bereits aus FIG 2 bekannten Komponenten die dort verwendeten Bezugszeichen. Zur Vermeidung von Wiederholungen wird im folgenden lediglich auf Abweichungen gegenüber der Darstellung nach FIG 2 eingegangen. Danach ist wie oben beschrieben zur elektrischen Verbindung der beiden Sammelschienenblöcke 2, 3 der Verbindungsstecker 4 mit den Lyra-Kontakten 15 für jede der Sammelschienen 6 vorgesehen.

Mit der Realisierung von Sammelschienenblöcken mit und ohne Einspeiseklemme ist es möglich, jede beliebige Anzahl von Abzweigen bzw. Schaltgeräten 1 aufzubauen.
- Einfachbeispiel
   4 Abzweige mit 4 KW Leistung; es wird benötigt:
   - 1x ein 4er Sammelschienenblock mit Einspeiseklemme
- Extrembeispiel
   18 Abzweige mit 1,5 KW Leistung; es wird benötigt:
   - 1x ein 4er Sammelschienenblock mit Einspeiseklemme
   - 2x ein 4er Sammelschienenblock ohne Einspeiseklemme
   - 2x ein 3er Sammelschienenblock ohne Einspeiseklemme
   - 4x Verbindungsstecker mit Doppel-Lyra-Kontakten.

## Patentansprüche

1. Mehrphasiges Sammelschienensystem zur Stromversorgung mehrerer Schaltgeräte (1), **dadurch gekennzeichnet, dass** das Sammelschienensystem mindestens einen ersten (2) und einen zweiten Sammelschienenblock (3) mit Sammelschienen (6) aufweist, wobei die Sammelschienen (6) des ersten Sammelschienenblocks (2) mit mehreren fest angebauten Einspeiseklemmen (5) und mittels eines mehrpoligen Verbindungssteckers (4) mit den Sammelschienen (6) des zweiten Sammelschienenblocks (3) elektrisch verbunden sind.

2. Mehrphasiges Sammelschienensystem nach Anspruch 1, **dadurch gekennzeichnet, dass** mindestens an einem der freien Enden der Sammelschienenblöcke (2, 3) ein weiterer Sammelschienenblock (7, 8) mittels eines weiteren Verbindungssteckers (4) angeschlossen ist.

3. Mehrphasiges Sammelschienensystem nach Anspruch 1 oder 2, **dadurch gekennzeichnet, dass** der Verbindungsstecker (4) als Doppel-Lyra-Verbindungsstecker mit mindestens vier Lyra-Kontakten (15) pro Phase ausgeführt ist, von denen zwei eine der Sammelschienen (6) des ersten Sammelschienenblocks (2) und die beiden anderen die gegenüberliegende Sammelschiene (6) des zweiten Sammelschienenblocks (3) kontaktieren.

4. Mehrphasiges Sammelschienensystem nach einem der vorangehenden Ansprüche, **dadurch gekennzeichnet, dass** die Sammelschienenblöcke (2, 3, 7, 8) jeweils durch einen Befestigungssockel (9) gehalten sind, der zur mechanischen Adaptierung mehrerer Schaltgeräte (1) dient.

5. Mehrphasiges Sammelschienensystem nach einem der vorangehenden Ansprüche, **dadurch gekennzeichnet, dass** die Einspeiseklemmen als Käfigzug-Federklemmen (5) ausgeführt sind.

6. Mehrphasiges Sammelschienensystem nach einem der vorangehenden Ansprüche, **dadurch gekennzeichnet, dass** die Sammelschienenblöcke (2, 3, 7, 8) Anschlüsse aufweisen, die als Käfigzug-Federklemmen (11) ausgeführt sind und zur elektrischen Verbindung mit Anschlüssen (12) der Schaltgeräte (1) dienen.

## Claims

1. Polyphase busbar system for supplying power to two or more switching devices (1), **characterized in that** the busbar system has at least one first (2) and one second busbar block (3) having busbars (6), the busbars (6) of the first busbar block (2) being electrically connected to two or more permanently attached supply terminals (5) and, by means of a multipole connecting plug (4), to the busbars (6) of the second busbar block (3).

2. Polyphase busbar system according to Claim 1, **characterized in that** a further busbar block (7, 8) is connected to at least one of the free ends of the busbar blocks (2, 3) by means of a further connecting plug (4).

3. Polyphase busbar system according to Claim 1 or 2, **characterized in that** the connecting plug (4) is in the form of a dual lyre-shaped connecting plug having at least four lyre-shaped contacts (15) per phase, of which two make contact with one of the busbars (6) of the first busbar block (2) and the other two make contact with the opposing busbar (6) of the second busbar block (3).

4. Polyphase busbar system according to one of the preceding claims, **characterized in that** the busbar blocks (2, 3, 7, 8) are each retained by a fixing socket (9), which acts as a mechanical adapter for two or more switching devices (1).

5. Polyphase busbar system according to one of the preceding claims, **characterized in that** the supply terminals are in the form of cage clamp spring terminals (5).

6. Polyphase busbar system according to one of the preceding claims, **characterized in that** the busbar blocks (2, 3, 7, 8) have connections, which are in the form of cage clamp spring terminals (11) and serve the purpose of making the electrical connection with connections (12) of the switching devices (1).

## Revendications

1. Système de barres collectrices polyphasées pour l'alimentation en courant de plusieurs appareils de distribution (1), **caractérisé par le fait que** le système de barres collectrices comporte au moins un premier bloc de barres collectrices (2) et un deuxième bloc de barres collectrices (3) avec des barres collectrices (6), les barres collectrices (6) du premier bloc de barres collectrices (2) étant reliées électriquement à plusieurs bornes d'alimentation (5) fixes et, au moyen d'une fiche de connexion multipolaire (4), aux barres collectrices (6) du deuxième bloc de barres collectrices (3).

2. Système de barres collectrices polyphasées selon la revendication 1, **caractérisé par le fait qu'**un autre bloc de barres collectrices (7, 8) est raccordé au moins à l'une des extrémités libres des blocs de barres collectrices (2, 3) au moyen d'une autre fiche de connexion (4).

3. Système de barres collectrices polyphasées selon la revendication 1 ou 2, **caractérisé par le fait que** la fiche de connexion (4) est réalisée comme une fiche de connexion en double lyre avec au moins quatre contacts de lyre (15) par phase, parmi lesquels deux mettent en contact l'une des barres collectrices (6) du premier bloc de barres collectrices (2) et les deux autres mettent en contact la barre collectrice opposée (6) du deuxième bloc de barres collectrices (3).

4. Système de barres collectrices polyphasées selon l'une des revendications précédentes, **caractérisé par le fait que** les blocs de barres collectrices (2, 3, 7, 8) sont maintenus à chaque fois par un socle de fixation (9) qui sert à l'adaptation mécanique de plusieurs appareils de distribution (1).

5. Système de barres collectrices polyphasées selon l'une des revendications précédentes, **caractérisé par le fait que** les bornes d'alimentation sont réalisées comme des bornes à ressorts à cage (5).

6. Système de barres collectrices polyphasées selon l'une des revendications précédentes, **caractérisé par le fait que** les blocs de barres collectrices (2, 3, 7, 8) comportent des bornes qui sont réalisées comme des bornes à ressorts à cage (11) et servent à la liaison électrique avec des bornes (12) des appareils de distribution (1).
